# EUROPEAN PATENT APPLICATION

(11) **EP 2 559 475 A1**
(43) Date of publication of application: **20.02.2013**
(21) Application number: 11006646.1
(22) Date of filing: 15.08.2011
(51) Int. Cl.: B01D 53/62, B01D 53/34, C01F 11/18, C04B 2/10, F27D 17/00

(54) **Apparatus and system for CO2 capture from fuel combustion**

(71) Applicant: Alstom Technology Ltd., 5400 Baden (CH)
(72) Inventor: Heinz, Gerhard, 73732 Esslingen (DE); Stallmann, Olaf, 55270 Essenheim (DE)
(74) Representative: Simonsson, Erik

(57) **Abstract**

The present invention relates to an apparatus for decarbonization of calcium carbonate into carbon dioxide rich exhaust gas comprising:
a reactor (30) for releasing the CO₂ by decarbonization of CaCO₃;
a duct (33) for forwarding the CO₂ rich exhaust gas generated in the reactor for further processing; a system for recirculation of at least a portion of the CO₂ rich exhaust gas generated in the reactor back into the reactor;
a firing system (10) for indirect heating of the reactor; and means for indirect heating (11). Also a system for capturing CO₂ from an exhaust gas comprising a first reactor (120) wherein the carbon dioxide present in the flue gas is captured from the flue gases by carbonization; a second reactor (130) to which the solid material contained in the flue gases output from the first reactor are transferred, wherein the said solid material are subject for heat treatment in order to extract carbon dioxide therefrom by decarbonization; means (111) for indirect heating of the second reactor (130); means (150) for transferring the exhaust gas generated by the means for indirect heating of the second reactor, to the first reactor: means (133) for transporting the captured carbon dioxide for further processing.

## Description

### Field of the Invention

The present invention relates to an apparatus and system for capturing carbon dioxide by using regenerative calcium cycle in systems.

### Background of the Invention

In the combustion of fuel, for example coal, oil, peat, waste, natural gas, etc in a combustion plant, such as power plant, a process gas comprising among other components, carbon dioxide in large amounts. The negative effects of carbon dioxide on climate change are well known and there is a strong demand on reducing the emissions of carbon dioxide generated. This demand applies not only to the different power plants as above but also other situations and other industries where CO₂ is generated in their processes or by their energy consumption, for example in the cement industry and steel industry. There are a lot of different methods and arrangements for reducing the carbon dioxide emission.

However, common for the methods is that the separation of carbon dioxide from exhaust gases generated in the different industrial plants as above are energy demanding and costly and there is a need to find more efficient ways.

In one of the methods for capturing CO₂ the separation of CO₂ may take place by capturing via a combined carbonation and calcination cycle. In such, lime (CaO) may be used as a sorbent agent for the carbon dioxide, forming carbonate of calcium (CaCO₃) during the carbonation reaction. In the following, the reverse calcintion reaction produces a gas stream rich in carbon dioxide and CaO.

A method and system for a regenerative calcium cycle (RCC) is described in US 6. 737, 031. More specifically, a method for capturing sulfur dioxide (SO₂) and carbon dioxide (CO₂) is described therein. For capturing of the carbon dioxide the method comprises steps wherein the carbon dioxide present in the flue gases is captured by carbonization and then decarbonised and the carbon dioxide released is transferred for further treatment or storage. The method herein described is said to be suitable for combustion of carbon-containing matter like fossil fuels or waste, thus so-called high quality fuels.

There is a need for systems and apparatus wherein carbon dioxide may be captured from systems being less energy requiring or using less energy intense fuels of lower quality, and a high purity CO₂ gas stream is obtained.

### Summary of the Invention

The present invention relates to an apparatus and system for capturing CO2 in a system. The apparatus and system allows use of fuel in the range of high quality fuel to low quality fuel.

According to an aspect illustrated herein, there is provided an apparatusfor decarbonization of calcium carbonate into carbon dioxide rich exhaust gas which comprises:
a reactor for releasing the CO₂ by decarbonization of CaCO₃;
a duct for forwarding the CO₂ rich exhaust gas generated in the reactor for further processing;
a system for recirculation of at least a portion of the CO₂ rich exhaust gas generated in the reactor back into the reactor; and
a firing system for indirect heating of the reactor;
and means for indirect heating 12.

An embodiment of the invention is an apparatus wherein the reactor is operating at temperature of between 900 and 1100 °C, preferably at 900 °C.

Another embodiment of the invention is an apparatus for decarbonization wherein the system for recirculation of the hot CO₂ rich exhaust gas comprises heat exchanger configured to heat the portion of exhaust gas recirculated into reactor.

Another embodiment of the invention is an apparatus for decarbonization wherein the system for recirculation of the hot exhaust gas comprises at least one unit for dust removal.

Another embodiment of the invention is an apparatus for decarbonization wherein the system for recirculation comprises: a heat exchanger for recovering the heat from the reactor; a unit for conditioning the CO₂ rich exhaust gas forwarded from the reactor; recirculating, at least a portion of the CO₂ rich exhaust gas to the reactor, means for pressurizing the said recirculated CO₂ rich exhaust gas.

Another embodiment of the invention is an apparatus wherein the reactor is a circulating fluidized bed.

Another embodiment of the invention is an apparatus wherein the reactor is a bubble bed reactor.

According to other aspects illustrated herein, there is provided a system for capturing CO₂from an exhaust gas generated when combustion of low quality fuel comprises:
a first reactor wherein the carbon dioxide present in the flue gas is captured from the flue gases by carbonization;
a second reactor to which the solid material contained in the flue gases output from the first reactor are transferred, wherein the said solid material are subject for heat treatment in order to extract carbon dioxide therefrom by decarbonization;
means for indirect heating of the second reactor,
means for transferring the exhaust gas generated by the means for indirect heating of the second reactor, to the first reactor; and means for transporting the captured carbon dioxide for further processing.

Another embodiment of the invention is a system, wherein the indirect heating is performed by, at least partly, recirculation and of the carbon dioxide CO₂ rich exhaust gas back to the second reactor two wherein the decarbonation is performed, and with heat exchanging before the reintroduction of the exhaust gas.

Another embodiment of the invention is a system, wherein the first reactor is a carbonator. The first reactor is operating at a temperature ranging between 550 to 750 °C, preferably 650 °C.

Another embodiment of the invention is a system, wherein the second reactor is a calciner. The second reactor is operating at a temperature ranging between 800 to 1100 °C, preferably 900 °C.

Another embodiment of the invention is a system wherein the calciner is circulating fluidized bed calciner.

Another embodiment of the invention is a system wherein the calciner is a bubble bed calciner.

Another embodiment of the invention is a system wherein solid material is transferred from the first reactor via a pipe to the second reactor, and is preheated by heat exchanging in a heat exchanger, for example a solid/solid heat exchanger, with solid material transferred from the second reactor via a pipe to the first reactor.

Another embodiment of the invention is a system wherein the heat of the exhaust gas substantially free from carbon dioxide CO₂ being forwarded from the first reactor to further processing, is exchanged with the exhaust gas to be introduced into the first reactor.

Another embodiment of the invention is a system wherein the system is applied as CO₂ capturing system in a power plant.

Another embodiment of the invention is a system wherein the exhaust gas to be introduced into the first reactor is dedusted.

Another embodiment of the invention is a system wherein the pressure of the exhaust gas to be Introduced into the first reactor is adjusted by a fan before said introduction.

Another embodiment of the invention is a system wherein the apparatus is incorporated for capturing carbon dioxide CO₂ generated by low quality fuel.

Another embodiment of the invention is a system wherein a unit for condition the CO₂ rich exhaust gas before transfer to further treatment is included, preferably a unit for removal of dust, preferably a unit for electrostatic precipitation.

Another embodiment of the invention is a system wherein the CO2 rich exhaust gas is treated in a gas processing unit (GPU).

Another embodiment of the invention is a system wherein at least a portion of the gas treated in the gas processing unit (GPU) is forwarded to the means for transferring the exhaust gas generated by the means for indirect heating of the second reactor, to the first reactor.

Another embodiment of the invention is a system wherein at least a portion of the gas treated in the gas processing unit (GPU) is forwarded to be introduced in the firing system via a duct.

The above described and other features are exemplified by the following figures and detailed description.

### Brief description of the Drawings

Referring now to the drawings, which are exemplary embodiments, and wherein the like elements are numbered alike:
Figure 1 schematically depicts a CO₂ capturing system implemented for cleaning exhaust gas from a combustion process.
Figure 2 is a flow scheme depicting an arrangement of the present invention wherein the exhaust gas is recirculated in a closed loop.
Figure 3 schematically depicts an apparatus of the invention.

### Description of preferred embodiments

The terms "indirect" or "indirectly" as used herein in connection with heat exchange between two media, such as heating, cooling or chilling, denotes that the heat exchange occurs without mixing the two medias together.

Indirect heat exchange, or indirect heating, takes place in the apparatus, and in the second reactor, according to the system of the invention.

By this arrangement it is possible to use fuel from different sources, both of high quality fuels as well as fuels of lower quality from energy efficiency point of view.

Depending on the quality of the fuel used for generating the indirect heating of the second reactor / the firing system is fed with air and/or oxygen. As an example, the apparatus and the system may be suitable for fuels having the following fuel data of content (percent by volume): H₂: 3, CO:22, CO₂: 21, N₂: 50, H₂O: 3, CH₄: -, Other components: 1. Thus, the system and the apparatus of the inventions provide flexible arrangements for using different qualities of fuels. Depending on the quality of the fuel the bumer may, together with the fuel, be fed with air or oxygen. If the fuel is of less good quality the amount of oxygen and air may be varied from 100 percent oxygen to 100 percent air. Fuel of lower quality requires a larger amount of oxygen to be fed for combustion of the fuel for the indirect heating of the second reactor. If fuel of high quality is used, combustion with air may occur, or air mixed with oxygen.

The system of the invention provides the possibility of capturing CO₂ where an Indirect contact heat exchanger, wherein the streams of media remain separate and the heat is transferred continuously through an impervious dividing wall.

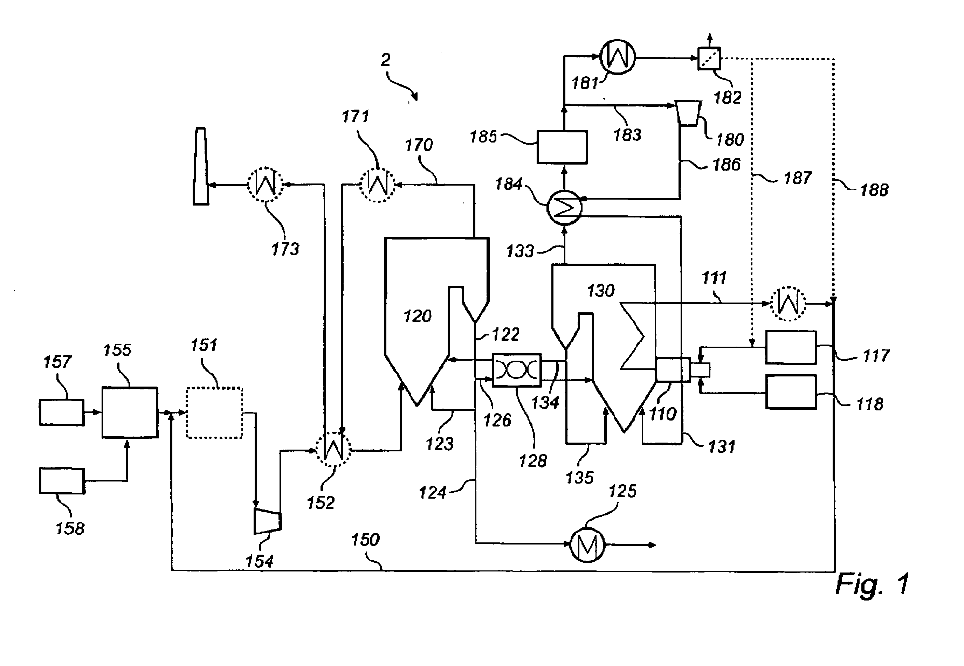

An embodiment of the system of the invention is further illustrated in figure 1.

Herein, the system is arranged in connection with a combustion process unit 155 wherein the carbon dioxide in the generated exhaust gas is to be captured by the system of the invention. The combustion system 155 is fed with fuel and air and/or oxygen via pipe 157 and duct 158, respectively.

The flue gas from the combustion process unit is combined with the recirculated exhaust gas transferred from the firing system 110 for indirect heating of the second reactor 130 and transferred via duct 150.

Optionally, the system 1 is arranged with a unit 151 for conditioning CO₂ containing flue gas before it is entered the first reactor 120 via duct 150. The conditioning of the CO₂ containing flue gas may, for example, be treatment of the exhaust gas by removal of NOx gases (DeNox), or dust removal, which may be performed by, for example, electrostatic precipitation (ESP) or any other suitable dust removal device.

The exhaust gas forwarded in duct 150 is then pressurized by the fan unit 154 and may be heated in the heat exchanger 152 before introduction to the first reactor 120, thus the reactor for capturing the carbon dioxide. In the first reactor CaO (lime) is present and is used for sorption of the carbon dioxide to form lime stone, calcium carbonate (CaCO₃) in an exothermal reatcion. The exhaust gas is pressurized to 50 mbar to 400 mbar, preferably 100 mbar, and heated to a temperature between 300°C and 700°C for an optimized sorption.

The exhaust gases with lean content of carbon dioxide CO₂ forwarded from the first reactor 120 via duct 170 may optionally be cooled in multiple steps, the heat may be recovered in unit 171, may be included in the heat exchanger 152 for preheating of exhaust gas which will be introduced in the first reactor, or another heat exchanger 173 for recovering the heat before the carbon dioxide gas is transferred for further processing. The system of the invention using the regenerative calcium cycle comprises transferring of solid material between the first reactor 120 and the second reactor 130.

In the first reactor 120 the carbon dioxide CO₂ is captured by reaction with lime, CaO, forming calcium carbonate, CaCO₃.

The reaction taking place in the first reactor: CaO + CO₂ -> CaCO₃. The first reactor may also be denoted "the carbonator"and the reaction "carbonation".

The reaction is exothermic, takes place at temperature of between 550 to 850 °C. The carbonator is typically operating at a temperature of between 600 to 700°C, preferably at about 650 °C.

From the first reactor solid material being rich in calcium carbonate CaCO₃. but also containing a certain amount of lime, CaO, as well as other components, are transferred to the second reactor via pipe 122. The stream of solid material is split for different destinations of the solid material, one part of the solid material in pipe stream 122 is transferred back to the first reactor 120, via pipe 123. Another part of the solid material are transferred for further treatment, via pipe 124. Suitable, the heat of this part is recovered by heat exchanging, shown by heat exchanger 125. Another part is transferred, via duct 126, to the second reactor 130. The amount of solid materials circulated is 3 to 20 times higher than the CO₂ flow captured by the CaO in the first reactor.

In the second reactor 130 the calcium carbonate CaCO₃ decomposes into lime CaO and carbon dioxide CO₂ upon heating of the calcium carbonate. The reaction of the second reactor: CaCO₃ -> CaO + CO₂

The process is a decarbonation of the CaCO₃ forming CaO and CO₂ when reacting with oxygen at high temperature. The second reactor is also called "the calciner" and the process also called "calcination". The reaction is endothermic and is performed at a temperature of between 800 and 1100 °C, typically at temperature about 900 °C.

The solid material from the first reactor, the 'carbonator' comprises limestone CaCO₃ as a main part, but also lime and carbon dioxide is transported via duct 122. The stream is splitted where one portion of the stream is transferred to the second reactor 130, the 'calciner'. A second portion, comprising lime, CaO, and limestone CaCO₃ is transferred via pipe 124 for further processing. The heat of this stream may be recovered by heat exchanging in heat exchanger 125.

Another portion of the stream in pipe 122 may be returned back to the first reactor 120 via pipe 123.

From the second reactor 130 the solid comprising mainly the lime CaO produced by the decomposition of the calcium carbonate Is transferred from the second reactor via pipe 132, which is splitted, via pipe 134 a portion of the solid stream is transferred to the first reactor. Another portion is recirculated back to the second reactor via pipe 135.

A heat exchanger 128 is arranged for recovering the heat transferred from the second reactor, for preheating the solid material of pipe 126 with the heat of solid material transferred via pipe 134, before entering the second reactor. The heat exchanger may for example be a cross heat exchanger transferring heat from the solid material of the second reactor with the solid material of the first reactor (solid/solid heat exchanger).

The carbon dioxide CO₂ rich exhaust gas generated in the second reactor is separated from the solid material e.g. in cyclones or other methods separating solid material from a gas stream. The gas is transferred from the reactor via duct 133 for further processing like heat recovery and particulate removal. This may be performed in equipments like a saline aquifer (SA) or an enhanced oil recovery (EOR), but the list of examples is not exhaustive. Optionally, an arrangement for dust removal 185 is included in the system. The dust present in the carbon dioxide CO₂ rich exhaust gas generated in the second reactor shall be removed before it is further treated in a gas processing unit (GPU).

The carbon dioxide rich exhaust gas generated by the means for indirect heating may typically comprise contaminants in the form of, for example, dust particles, hydrochloric acid, HCl, nitrous oxides, NOx, sulphur oxides, SOx, and heavy metals including mercury, Hg.

If the concentration of gases like oxygen (O₂), nitrogen (N₂) etc, most often introduced during the carbonation, is high a separation step is needed to be included in the system. Otherwise, the following treatment may be performed in compression- and/or drying systems. The dust generated during the calcination process in the second reactor may be extracted and removed from the recirculation loop for further processing in a unit for conditioning 185, for example in a Electrostatic Precipitator (ESP) process. Further, the heat of the gas may be recovered by a heat exchanger 181 before transferred for further processing, for example compression, storage etc.

After the dust removal the carbon dioxide rich exhaust gas is, at least a portion, recirculated to the second reactor via duct 183. The gas is preferably pressurized in a fan 180 and preheated by the hot exhaust gas in duct 133 in a heat exchanger (gas/gas) 184 before the gas carbon dioxide rich exhaust gas is introduced in the second reactor 130, via duct 131.

Optionally, the carbon dioxide CO₂ enriched gas may be forwarded to a gas processing unit (GPU) 182 before the gas is transferred for further processing.

Optionally, the carbon dioxide rich exhaust gas, or at least a portion, may be combined, via duct 188, with gas in duct 150, recirculating the hot exhaust gas used for the indirect heating of the second reactor to the first reactor 120.

Another option is to introduce, or at least a portion of, the carbon dioxide enriched gas via duct 187, to the duct feeding the burner with air and/or oxygen.

The hot exhaust gas comprising carbon dioxide CO₂ generated for the indirect heating the second reactor (the calciner) is forwarded to the first reactor (the carbonator) 120, via duct 150.

The heat of the hot exhaust gas generated for the indirect heating of the second reactor may be recovered by heat exchanger (gas/gas heater) 112.

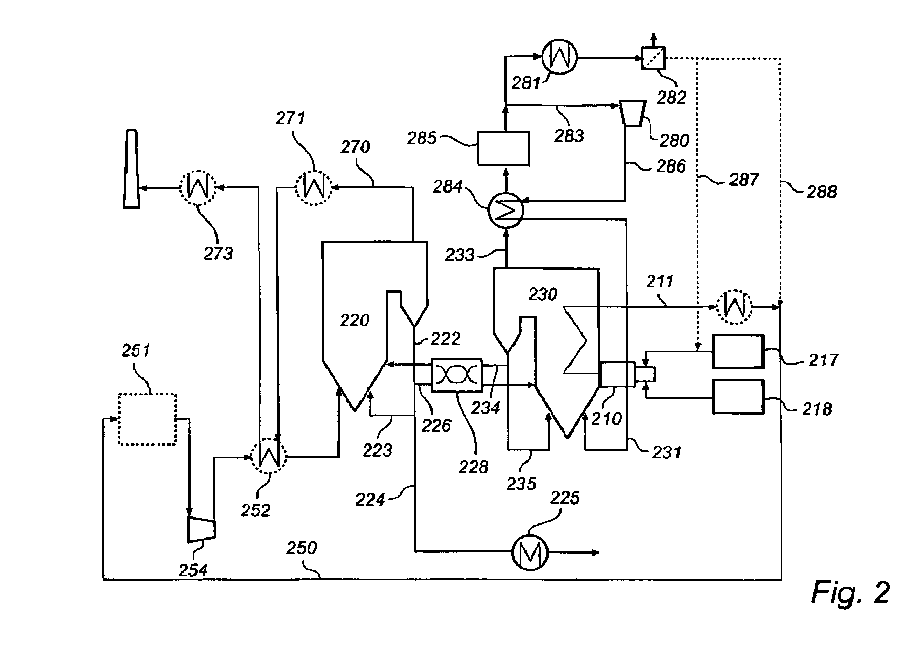

An embodiment of the system of the invention is further illustrated in figure 2, wherein an arrangement for recirculating the exhaust gas in a closed loop is depicted.

The system is heated by indirect heating of the second reactor 230 by the firing system 210 being fed with fuel 218 and air and/or oxygen 217.

The exhaust gas generated herein, comprising carbon dioxide, is forwarded to the first reactor 220, via duct 250.

Optionally, the exhaust gas may be conditioned in a unit for conditioning the exhaust gas 251 before its introduction into the first reactor. The conditioning may, for example, include treatment of the exhaust gas by removal of NOx gases (DeNOx), or dust removal for example by electrostatic precipitation or any other suitable dust removal device.

The exhaust gas is then pressurized by passing the fan unit 254 and preheated by the heat exchanger 252 before introduction to the first reactor 220, the reactor for capturing the carbon dioxide, as described above.

In the first reactor CaO (lime) is present and is used for sorption of the carbon dioxide to form lime stone, calcium carbonate (CaCO₃). The exhaust gas is preferably pressurized to 50 mbar to 400 mbar, preferably 100 mbar, and heated to a temperature between 300 °C and 600 °C for an optimized sorption. Also In this embodiment, the carbonator is typically operating at a temperature of between 550 to 850°C, for example between 600 to 700 °C, preferably at about 650 °C.

The exhaust gases free from carbon dioxide C02 forwarded from the first reactor 220 via duct 270 may be cooled in multiple steps heat recovery, the heat may be recovered in unit 271, may be included in the heat exchanger 252 for preheating of exhaust gas which will be introduced in the first reactor, or another heat exchanger 273 for recovering the heat before the carbon dioxide gas is transferred for further processing.

The system of the invention using the regenerative calcium cycle comprises the transfer of solid material between the first reactor 220 and the second reactor 230.

The solid material and the exhaust gas comprising carbon dioxide is forwarded to the second reactor 230 wherein the 'decarbonation' of the CaCO₃ takes place. The solid material from the first reactor, the 'carbonator' comprises limestone CaC03 as a main part, but also lime and carbon dioxide is transported via duct 222. The stream is splitted, one portion of the stream is transferred to the second reactor 230, the 'calciner'. A second portion, comprising lime, CaO, and limestone CaCO₃ is transferred via pipe 224 for further processing. The heat of this stream may be recovered by heat exchanging in heat exchanger 225.

Another portion of the stream in pipe 222 may be returned back to the first reactor 220 via pipe 223.

The stream from the second reactor 230 comprises the solid material of mainly lime CaO produced by the decomposition of the calcium carbonate is transferred from the second reactor via pipe 232. which is splitted, via pipe 234 a portion of the solid stream is transferred to the first reactor. Another portion is recirculated back to the second reactor via pipe 235.

Optionally, a heat exchanger 228 is arranged for recovering the heat forwarded from the second reactor, for preheating the solid material of pipe 226 before entering the second reactor. The heat exchanger may for example be a solid/solid heat exchanger.

The carbon dioxide CO₂ rich exhaust gas in the second reactor is separated from the solid material. The gas is forwarded from the reactor via duct 233 for further processing. An arrangement for dust removal 285 may optionally be included in the system. The dust present in the carbon dioxide CO2 rich exhaust gas generated in the second reactor shall be removed before it is further treated in a gas processing unit (GPU).

If the concentration of gases like oxygen (O2), nitrogen (N2) etc, most often introduced during the carbonation, is high a separation step is needed. Otherwise, the following treatment may be performed in compression- and/or drying systems. The dust generated during the calcination process in the second reactor may be extracted and removed from the recycle loop for further processing in a unit for conditioning 285, for example in a Electrostatic Precipitator (ESP) process. Further, the heat of the gas may be recovered by a heat exchanger 281 before transferred for further processing, for example compression, storage etc.

After the dust removal the carbon dioxide rich exhaust gas is, at least a portion, recirculated to the second reactor via duct 283. The gas is preferably pressurized in a fan 280 and preheated by the hot exhaust gas in duct 233 in a heat exchanger (gas/gas) 284 before the gas carbon dioxide rich exhaust gas is introduced in the second reactor 230, via duct 231.

Optionally, the carbon dioxide CO2 enriched gas may be forwarded to a gas processing unit (GPU) 282 before the gas is transferred for further processing.

Optionally, the carbon dioxide rich exhaust gas, or at least a portion, may be combined, via duct 288, with gas in duct 211, forwarding the hot exhaust gas used for the indirect heating of the second reactor.

Another option is to introduce the carbon dioxide enriched gas, or at least a portion, via duct 287, to the duct feeding the burner with air and/or oxygen. The hot exhaust gas comprising carbon dioxide CO₂ generated for heating the second reactor (the calciner) is forwarded to the first reactor (the carbonator) 220, via duct 150.

The heat of the hot exhaust gas generated for the indirect heating of the second reactor may be recovered by heat exchanger (gas/gas heater) 212.

By the term "indirect heat exchanger" as used herein, Is meant a heat exchanger configured for heat exchange between two fluid streams without mixing of the two fluid streams occurring. The heat exchanger may also be be of type solid/solid heat exchanger. The heat exchanger may for example be of the shell and tube type. Suitable types and dimensions of heat exchangers are readily identified by the person skilled in the art.

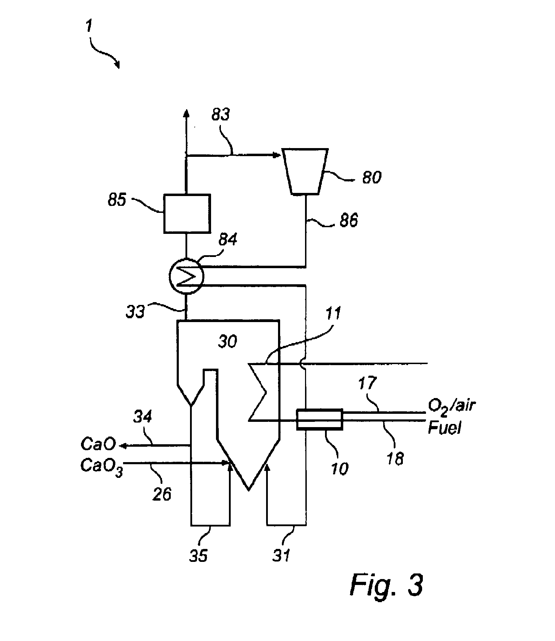

An embodiment of the system of the invention is further illustrated in figure 3, wherein an apparatus for decarbonisation of calcium carbonate into carbon dioxide rich exhaust gas is shown.

The apparatus comprises the reactor 30, or reaction chamber where the reaction is taking place, also being denoted the second reactor when included in the system described above. The reactor, reaction chamber corresponds to the second reactor in the system described above. The reactor 30 Is fed with solid material rich in CaC03 via pipe 26. The reactor is operating at temperatures of between 900 and 1100 °C, preferably at 900°C at which temperature the CaC03 decomposes into CaO and CO2, as described above. The solid CaO is forwarded from the reactor 30 via pipe 34. The hot CO₂ rich exhaust gas is forwarded from the reactor via duct 30. The reactor operating at high temperatures is heated by indirect heating, via a firing system 10. This arrangement allows use of fuels of varying quality. The Depending on the fuel quality, more or less oxygen may be supplied to the firing system. If fuel of high quality is used for heating the apparatus, the firing system may be fed with air, if lower quality the air may be mixed with oxygen, or be pure oxygen.

Optionally, an arrangement for dust removal 85 is included in the apparatus. The dust present in the carbon dioxide CO₂ rich exhaust gas generated in the second reactor shall be removed before it is further treated.

The carbon dioxide rich exhaust gas generated by the means for indirect heating may typically comprise contaminants in the form of, for example, dust particles, hydrochloric acid. HCl, nitrous oxides, NOx, sulphur oxides, SOx, and heavy metals including mercury, Hg. If the concentration of gases like oxygen (O2), nitrogen (N2) etc, most often introduced during the carbonation, is high a separation step is needed to be included in the system. Otherwise, the following treatment may be performed in compression- and/or drying systems. The dust generated during the calcination process in the second reactor may be extracted and removed from the recirculation loop for further processing in a unit for conditioning 185, for example in a Electrostatic Precipitator (ESP) process. The apparatus corresponds to the second reactor incorporated in the system shown in figures 1 and 2.

After the dust removal the carbon dioxide rich exhaust gas is, at least a portion, recirculated to the second reactor via duct 83. The gas is preferably pressurized in a fan 80 and preheated by the hot exhaust gas in duct 33 in a heat exchanger (gas/gas) 84 before the gas carbon dioxide rich exhaust gas is introduced in the second reactor 30, via duct 31.

### Advantages obtained by the present invention are:

The components In the system are known for industrial application which simplifies the installation.

The quality of fuel for heating the system may vary widely as the heating is performed indirectly into the second reactor, the calciner.

By the invention a system having reduced amount of sources of CO2 emissions is provided.

Because of the recirculation of the combusted flue gas heating up the second reactor (the calciner) to the first reactor (the carbonator) the system provides a higher CO2 capture rate compared to a solution without this recirculation. The combustion process in the second reactor (the calciner) is performed by combusting the fuel with air or oxygen enriched air. Consequently, no air separation unit (ASU) or at least only a significant smaller ASU will become necessary compare to the standard solution. Consequently lower capacity expenditure as well as operational expenditure per per t/ CO₂ captured will arise.

The system may be integrated in a wide range of processes.

The CO₂ product captured is of high purity as no direct entrainment of impurities into the CO₂ product occur. Impurities and contaminants are mainly adsorbed by the CaO.

The recirculation of the exhaust gas allows to exclude unit for separation the oxygen, for example an air separation unit (ASU) or an comparable oxygen production solution.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An apparatus 1 for decarbonization of calcium carbonate into carbon dioxide rich exhaust gas comprising
a reactor 30 for releasing the CO₂ by decarbonization of CaCO₃;
a duct 33 for forwarding the CO₂ rich exhaust gas generated in the reactor for further processing;
a system for recirculation of at least a portion of the CO₂ rich exhaust gas generated in the reactor back into the reactor;
a firing system 10 for indirect heating of the reactor; and
means for indirect heating 11.

2. An apparatus according to claim 1,
wherein the reactor is operating at temperature of between 900 and 1100 °C, preferably at 900 °C.

3. An apparatus for decarbonization according to any of claims 1 to 2, wherein the system for recirculation of the hot CO₂ rich exhaust gas comprises heat exchanger 84 configured to heat the portion of exhaust gas recirculated into reactor.

4. An apparatus for decarbonization according to any of claims 1 to 3 wherein the system for recirculation of the hot exhaust gas comprises at least one unit for dust removal 85.

5. An apparatus for decarbonization according to any of claims 1 to 4 wherein the system for recirculation comprises
a heat exchanger 84 for recovering the heat from the reactor;
a unit for conditioning the CO₂ rich exhaust gas forwarded from the reactor: recirculating, at least a portion of the CO₂ rich exhaust gas to the reactor 30, means for pressurizing 80 the said recirculated CO₂ rich exhaust gas.

6. A system 2 for capturing CO₂ from an exhaust gas comprises a first reactor 120 wherein the carbon dioxide present in the flue gas is captured from the flue gases by carbonization;
a second reactor 130 to which the solid material contained in the flue gases output from the first reactor are transferred, wherein the said solid material are subject for heat treatment in order to extract carbon dioxide therefrom by decarbonization;
means 111 for indirect heating of the second reactor;
means 150 for transferring the exhaust gas generated by the means for indirect heating of the second reactor, to the first reactor;
means 133 for transporting the captured carbon dioxide for further processing.

7. System according to claim 6, wherein the indirect heating is performed by, at least partly, recirculation of the carbon dioxide CO₂ rich exhaust gas back to the second reactor 130 wherein the decarbonation is performed, and with heat exchanging before the reintroduction of the exhaust gas.

8. System according to any of claims 6 to 7, wherein the first reactor is a carbonator.

9. System according to any of claims 6 to 8, wherein the first reactor 220 is operating at a temperature ranging between 550 to 750 °C, preferably 650 °C.

10. System according to any of claims 6 to 9, wherein the second reactor is a calciner.

11. System according to any of claims 6 to 10, wherein the second reactor is operating at a temperature ranging between 800 to 1100 °C, preferably 900 °C.

12. System according to any of claim 6 to 11, wherein solid material is transferred from the first reactor 120 via pipe 126 to the second reactor 130 is preheated by heat exchanging in heat exchanger 128, with solid material transferred from the second reactor via pipe 134 to the first reactor.

13. System according to any of claims 6 to 12, wherein the heat of the exhaust gas substantially free from carbon dioxide CO₂ being forwarded from the first reactor to further processing, is exchanged with the exhaust gas to be introduced into the first reactor 120.

14. System according to any of claims 6 to 13, wherein the system is applied as CO₂ capturing system in a power plant.

15. A system wherein the apparatus as defined in any of claims 6 to 14 is incorporated for capturing carbon dioxide CO₂ generated by low quality fuel.

16. System according to any of claims 6 to 15 wherein a unit for conditioning 185 the CO₂ rich exhaust gas before transfer to further treatment is included, preferably a unit for removal of dust, preferably a unit for electrostatic precipitation.

17. System according to any of claims 6 to 16, wherein CO₂ rich exhaust gas is treated in a gas processing unit (GPU) 182.

18. System according to claim 17 wherein at least a portion of the gas treated in the gas processing unit (GPU) is forwarded to the means 150 for transferring the exhaust gas generated by the means for indirect heating of the second reactor, to the first reactor.

19. System according to claim 17 wherein at least a portion of the gas treated in the gas processing unit (GPU) is forwarded to be introduced in the firing system 110 via duct 117.
